(19) Europäisches Patentamt
European Patent Office
Office européen des brevets

(11) **EP 3 401 634 A1**

(12) **EUROPÄISCHE PATENTANMELDUNG**

(43) Veröffentlichungstag:
**14.11.2018  Patentblatt 2018/46**

(51) Int Cl.:
**G01B 9/02** *(2006.01)*  **G01B 11/24** *(2006.01)*

(21) Anmeldenummer: **17170788.8**

(22) Anmeldetag: **12.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **TAYLOR HOBSON LIMITED**
**Leicester LE4 9JQ (GB)**

(72) Erfinder:
• **Am Weg, Christian**
**64289 Darmstadt (DE)**

• **May, Thilo**
**64283 Darmstadt (DE)**
• **Petter, Jürgen**
**64347 Griesheim (DE)**
• **Eiswirt, Peter**
**55129 Mainz (DE)**

(74) Vertreter: **Weilnau, Carsten et al**
**Quermann - Sturm - Weilnau**
**Patentanwälte Partnerschaft mbB**
**Unter den Eichen 5**
**65195 Wiesbaden (DE)**

(54) **ABSTANDSMESSANORDNUNG ZUR BESTIMMUNG EINES ABSTANDES ZU EINEM OBJEKT**

(57)    Die vorliegende Offenbarung betrifft eine Abstandsmessanordnung zur Bestimmung eines Abstandes zu einem Objekt (20), wobei die Abstandsmessanordnung folgendes umfasst:
- zumindest eine Lichtquelle (12) zur Erzeugung zumindest eines ersten monochromatischen und interferenzfähigen Lichtstrahls (12.1) einer ersten Wellenlänge und zur Erzeugung zumindest eines zweiten monochromatischen und interferenzfähigen Lichtstrahls (12.2) einer zweiten Wellenlänge,
- einen Multiplexer (14) zum Koppeln oder Kombinieren des zumindest ersten Lichtstrahls (12.1) und des zumindest zweiten Lichtstrahls (12.2) in einen gemeinsamen Messstrahl (M),
- einem Auskoppelelement (45) zum Aufteilen des Messstrahls (M) in einen Referenzstrahl (R) und in einen Signalstrahl (S), wobei der Referenzstrahl (R) entlang eines Referenzpfads (RP) und wobei der Signalstrahl (S) entlang eines Signalpfads (SP) propagiert,
- einen Phasenmodulator (60), welcher im Signalpfad (SP) angeordnet ist und welcher dazu ausgestaltet ist, die Phase des Signalstrahls (S) zeitlich periodisch zu modulieren.

Fig. 3

EP 3 401 634 A1

**Beschreibung**

Die vorliegende Entwicklung betrifft eine Abstandsmessanordnung zur Bestimmung eines Abstandes zu einem Objekt sowie ein Verfahren zur Bestimmung eines Abstandes zu einem Objekt als auch ein Computerprogramm zur Bestimmung eines Abstandes zu einem Objekt.

Hintergrund

Aus der DE 10 2008 033 942 B3 ist ein faseroptisches Mehrwellenlängeninterferometer zur absoluten Vermessung von Abständen und Topologien von Oberflächen in großem Arbeitsabstand bekannt. Dieses umfasst einen faseroptisch konzipierten optischen Mehrwellenlängen-Sensor, welcher zwei oder mehr Laser umfasst, deren Wellenlängen im optischen Telekommunikationsbereich liegen. Ein Sensorkopf ist dabei in Richtung eines Messstrahls periodisch räumlich modulierbar. Die optischen Signale der verwendeten Laser werden durch Multiplexer in einer gemeinsamen Faser zusammengeführt und zum Sensorkopf geleitet.

Die räumliche Modulation eines Messstrahls erfolgt hierbei mittels eines Piezoaktuators, welcher folglich eine bewegliche Komponente des Sensors dargestellt. Für die periodisch räumliche Modulation des Messstrahls sind entsprechende mechanische Bewegungen im Sensor zu applizieren. Diesen sind hinsichtlich Amplitude und Frequenz mechanisch bedingte Grenzen gesetzt. Des Weiteren werden durch mechanisch bewegte Bauteile oder Komponenten des Sensors unweigerlich Schwingungen erzeugt, die unter Umständen zu messtechnischen Problemen und/oder zur einer hörbaren Geräuschentwicklung führen können, die mitunter als störend empfunden wird.

Es ist demgegenüber Zielsetzung, eine verbesserte Abstandsmessanordnung zur Bestimmung eines Abstandes und/oder zur quantitativen Erfassung von Abständen und/oder Topologien von Oberflächen bereitzustellen, die möglichst ohne mechanisch bewegte Komponenten implementierbar ist, welche eine verminderte Geräuschentwicklung aufweist und welche vorrichtungstechnisch vergleichsweise einfach zu implementieren und anzusteuern ist. Es ist ferner Zielsetzung, die Präzision und Genauigkeit mittels der Abstandsmessanordnung zu messenden Abstände zu einem Objekt oder einer zu ermittelnden Oberflächentopologie des Objekts zu verbessern.

Erfindung und vorteilhafte Ausgestaltungen.

Diese Aufgabe wird mit einer Abstandsmessanordnung gemäß dem unabhängigen Patentanspruch 1, einem Verfahren zur Bestimmung eines Abstandes zu einem Objekt nach Anspruch 17 sowie mit einem Computerprogramm gemäß Patentanspruch 18 gelöst. Vorteilhafte Ausgestaltungen sind dabei jeweils Gegenstand abhängiger Patentansprüche.

Insoweit ist eine Abstandsmessanordnung zur Bestimmung eines Abstandes zu einem Objekt vorgesehen. Die Abstandsmessanordnung umfasst zumindest eine erste Lichtquelle zu Erzeugung zumindest eines ersten monochromatischen und interferenzfähigen Lichtstrahls einer ersten Wellenlänge. Die Lichtquelle ist ferner zur Erzeugung zumindest eines zweiten monochromatischen und interferenzfähigen Lichtstrahls einer zweiten Wellenlänge ausgestaltet. Die erste und die zweite Wellenlänge sind unterschiedlich. Die Lichtquelle kann ferner zur Erzeugung weiterer, beispielsweise dritter und/oder vierter monochromatischer und jeweils interferenzfähiger Lichtstrahlen ausgestaltet sein. Vorzugsweise ist die Lichtquelle zu Erzeugung von monochromatischen und interferenzfähigen Lichtstrahlen im optischen Telekommunikationsbereich zwischen 1520 nm und 1630 nm, bzw. zu Erzeugung von Wellenlängen ausgestaltet, die im sogenannten S-, C-oder L-Band liegen können.

Die Abstandsmessanordnung weist ferner einen Multiplexer zum Koppeln oder Kombinieren bzw. Überlagern des zumindest ersten Lichtstrahls und des zumindest zweiten Lichtstrahls in einen gemeinsamen Messstrahl auf. Mittels des Multiplexers können der zumindest erste Lichtstrahl und der zumindest zweite Lichtstrahl zur Bildung eines gemeinsamen Messstrahls miteinander kombiniert oder überlagert werden. Der Messstrahl beinhaltet somit spektrale Anteile der ersten Wellenlänge und der zweiten Wellenlänge. Im gemeinsamen Messstrahl sind der erste Lichtstrahl und der zweite Lichtstrahl überlagert. Im gemeinsamen Messstrahl propagieren der zumindest erste Lichtstrahl und der zumindest zweite Lichtstrahl parallel und in nahezu vollständiger transversaler Überdeckung.

Wenn die Lichtquelle zu Erzeugung mehrerer, d. h. von bis zu drei, vier oder noch weiterer Lichtstrahlen unterschiedlicher Wellenlängen ausgestaltet ist, werden diese ebenfalls mit demselben Multiplexer im gemeinsamen Messstrahl gekoppelt bzw. überlagert. Das heißt, der Messstrahl kann zumindest zwei aber auch drei oder vier oder noch weitere Lichtstrahlen unterschiedlicher Wellenlänge enthalten, bzw. aus einer Superposition solcher Lichtstrahlen unterschiedlicher Wellenlänge gebildet sein.

Die Abstandsmessanordnung weist ferner ein Auskoppelelement zum Aufteilen des vom Multiplexer erzeugten Messstrahls in einen Referenzstrahl und in einen Signalstrahl auf. Der Referenzstrahl propagiert dabei entlang eines Referenzpfads. Der Signalstrahl propagierte dabei entlang eines Signalpfads. Mittels des Auskoppelelements werden der Referenzpfad und der Signalpfad voneinander getrennt. Der Signalpfad erstreckt sich typischerweise vom Auskoppelelement zum Objekt. Am Objekt wird der Signalstrahl typischerweise reflektiert. Der reflektierte Signalstrahl propagiert typischerweise über den Signalpfad zurück. Der Signalpfad und der Referenzpfad werden typischerweise mittels eines Einkoppelelements wieder miteinander vereint, sodass der Referenzstrahl und der vom Objekt reflektierte Signalstrahl miteinander interferierbar sind. Mittels einer Detektoranordnung sind die miteinander interferierenden Strahlen, nämlich der Referenzstrahl und der vom Objekt reflektierte Signalstrahl interferometrisch und/oder wellenlängenselektiv erfassbar.

Die Abstandsmessanordnung weist ferner einen Phasenmodulator auf, welcher im Signalpfad angeordnet ist und welcher dazu ausgestaltet ist, die Phase des Signalstrahls zeitlich periodisch zu modulieren. Eine zeitlich periodische Modulation ermöglicht eine konstante oder entsprechend einer vorgegebenen Zeitfunktion folgende Modulation, d. h. eine zeitliche Veränderung der Phase des Signalstrahls.

Folglich ändert sich auch die Interferenz von reflektiertem Signalstrahl und Referenzstrahl entsprechend der zeitlich periodischen Modulation der Phase des Signalstrahls. Dies vereinfacht und präzisiert die interferometrische und/oder wellenlängensensitive Erfassung und Auswertung eines Interferenzsignals, welches aus einer Überlagerung des Referenzstrahls und des vom Objekt reflektierten Signalstrahls resultiert. Die zeitlich periodische Modulation der Phase des Signalstrahls wird typischerweise von einer Steuerung der Abstandsmessanordnung vorgenommen.

Eine Detektoranordnung zur interferometrischen und/oder wellenlängenselektiven Erfassung des Auswertestrahls, d. h. der Überlagerung des Referenzstrahls und des vom Objekt reflektierten Signalstrahls, kann über die zeitliche periodische Modulation der Phase des Signalstrahl eine zeitlich gemittelte Intensität des Interferenzmusters ermitteln. Die zeitlich gemittelte Detektion der Intensität ermöglicht einen genauen und präzisen Rückschluss über die relative Phase des reflektierten Signalstrahls zur Phase des Referenzstrahls am Ort der Detektoranordnung. Etwaige externe Störeinflüsse aber auch messtechnisch bedingte Toleranzen einer Phasenmessung können auf diese Art und Weise rechnerisch kompensiert werden.

Indem die Phase des Signalstrahls mittels eines Phasenmodulators periodisch moduliert, d. h. über die Zeit gemäß einer vorgegebenen stetig wiederkehrenden Funktion verändert wird kann die relative Phase zwischen dem reflektierten Signalstrahl und dem Referenzstrahl mit erhöhter Genauigkeit ermittelt werden. Dies verbessert die Genauigkeit der Bestimmung des Abstandes zu einem Objekt. Der zu messende Abstand zum Objekt ergibt sich aus der relativen Phase zwischen dem Referenzstrahl und dem vom Objekt reflektierten Signalstrahl.

Da der Phasenmodulator keine mechanisch bewegten Bauteile aufweist kann die Phase des Signalstrahl mit vergleichsweise hoher Frequenz moduliert werden. Es kann vorgesehen sein, dass der Phasenmodulator dazu ausgebildet ist, die Phase des Signalstrahls mit einer Frequenz oberhalb von 1 kHz, mit einer Frequenz oberhalb von 2 kHz, mit einer Frequenz oberhalb von 3 kHz, mit einer Frequenz oberhalb von 5 kHz oder mit einer Frequenz von mehr als 10 kHz, 50 kHz oder 100 kHz zu modulieren. Derart schnelle Phasenmodulationen können zur weiteren Verbesserung der Präzision und Messgeschwindigkeit der Abstandsmessung beitragen.

Zudem kann die Amplitude der Phasenmodulation mittels des Phasenmodulators um ein vorgegebenes Maß gesteigert werden. Es sind Phasenmodulation und von weit mehr als $2\pi$, $4\pi$, $6\pi$, $8\pi$ und darüber hinaus erzielbar.

Die zeitlich periodische Modulation kann beispielsweise eine sinusförmige Modulation aufweisen. Denkbar sind ferner sägezahnförmige oder rechteckige Modulationen der Phase. Der Phasenmodulator ist insbesondere dazu ausgestaltet, die Phase des Signalstrahls kontinuierlich und stetig zu modulieren, d. h. zu ändern.

Der Phasenmodulator kann insbesondere dazu ausgestaltet sein, den vom Messstrahl abgezweigten Signalstrahl als auch den vom Objekt reflektierten Signalstrahl zeitlich periodisch zu modulieren. Durchlaufen der zum Objekt gerichtete Signalstrahl und der vom Objekt reflektierte Signalstrahl den Phasenmodulator in entgegengesetzten Richtungen, so kann die Phasenmodulation des Signalstrahls bzw. des reflektierten Signalstrahls gegenüber dem Referenzstrahl weiter gesteigert werden.

Nach einer weiteren Ausgestaltung der Abstandsmessanordnung weist der Phasenmodulator einen elektrooptischen Modulator EOM auf. Der elektrooptische Modulator ist insbesondere elektrisch ansteuerbar. Mittels des elektrooptischen Modulator kann die Phase des Signalstrahls bzw. die Phase des reflektierten Signalstrahls mithilfe von elektrischen Steuersignalen einer Ansteuerung der Abstandsmessanordnung gezielt moduliert bzw. zeitlich verändert werden. Der elektrooptische Modulator kann unter Ausnutzung des Pockels- oder Kerr-Effekts zur Modulation der Phase des Signalstrahls bzw. der Phase des reflektierten Signalstrahls ausgestaltet sein.

Alternativ hierzu kann der Phasenmodulator auch einen akustooptischen Phasenmodulator aufweisen oder als solcher ausgestaltet sein. Auch kann der Phasenmodulator eine Flüssigkristallzelle als phasenmodulierende Komponente aufweisen.

Nach einer weiteren Ausgestaltung weist der elektrooptische Modulator einen Kristallkörper und zumindest zwei elektrisch mit dem Kristallkörper verbundene elektrisch ansteuerbare Elektroden auf. Die Elektroden sind typischerweise mit einer Steuerung der Abstandsmessanordnung elektrisch verbunden. Die Steuerung ist dazu ausgestaltet, an den Elektroden einer der vorzunehmenden Phasenmodulation korrespondierende elektrische Spannung oder einen elektrischen Strom bereitzustellen, sodass der Kristallkörper in Abhängigkeit des jeweils vorherrschenden und über die Elektroden angelegten elektrischen Feldes seinen Brechungsindex ändert.

Mit der elektrisch induzierten Brechungsindexänderung des Kristallkörpers ist die Phase des durch den Kristallkörper propagierenden Signalstrahls und/oder des vom Objekt reflektierten Signalstrahls bedarfsgerecht modulierbar.

Die Brechungsindexänderung des Kristallkörpers kann nahezu verzögerungsfrei mit dem über die Elektroden an den Kristall angelegten elektrischen Feldes variieren. Insoweit können vergleichsweise große Modulationsfrequenzen im Bereich oberhalb von zumindest 1 kHz aber auch oberhalb von 10 kHz problemlos realisiert werden.

Nach einer weiteren Ausgestaltung weist der Kristallkörper eine anisotrope Kristallstruktur auf. Der Kristallkörper kann insbesondere doppelbrechend ausgestaltet sein. Er kann entlang unterschiedlicher Kristallachsen unterschiedliche Brechungsindices aufweisen. Der Brechungsindex bzw. die unterschiedlichen Brechungsindices können durch Anlegen eines elektrischen Feldes zur Erzielung einer Phasenänderung oder Phasenmodulation variiert werden.

Nach einer weiteren Ausgestaltung ist der Kristallkörper nicht inversionssymmetrisch. Der Kristallkörpers gehört insbesondere zu der Klasse Kristalle, die den linearen elektrooptischen Effekt, auch Pockels-Effekt genannt, zeigen. Eine Änderung des Brechungsindex bzw. die Änderung der Doppelbrechung ändert sich linear zur Änderung des an den Kristallkörpers angelegten elektrischen Feldes. Nach einer weiteren Ausgestaltung kann der Kristallkörpers einen photorefraktiven Kristall aufweisen. Photorefraktive Kristalle ändern ihren Brechungsindex lokal in Abhängigkeit der auf den Kristall einwirkenden Lichtintensität.

Nach einer weiteren Ausgestaltung weist der Kristallkörpers einen Lithiumniobat Kristall, einen Kaliumdihydrogenphosphat Kristall oder einen Galliumarsenid Kristall auf. Lithiumniobat Kristalle eignen sich besonders gut für die Implementierung eines elektrooptischen Modulators, insbesondere eines Phasenmodulator.

Nach einer weiteren Ausgestaltung weist der Kristallkörpers einen Wellenleiter auf. Dieser kann in die Kristallstruktur des Kristallkörpers eindiffundiert sein. Der eindiffundierte Wellenleiter kann beispielsweise durch Titan-Eindiffusion oder durch Protonenaustausch in den Kristallkörper, beispielsweise in einen Lithiumniobat Kristall eingebracht sein. Der Wellenleiter muss nicht als eindiffundierten Wellenleiter ausgestaltet sein. Er kann auch beispielsweise durch Dotierung in einem III-V Halbleiter erzeugt werden.

Der Wellenleiter dient einem kontrollierten Überführen des Signalstrahl und/oder des vom Objekt reflektierten Signalstrahls durch den Kristallkörper. Mittels des Wellenleiters kann ein unkontrolliertes Divergieren des Signalstrahls während seiner Propagation durch den Kristallkörper vermieden werden. Die transversale Ausdehnung des Signalstrahls bleibt während seiner Propagation durch den Wellenleiter weitreichend konstant.

Auch können etwaige Intensitätsverluste des Signalstrahls zum Objekt gerichteten und/oder vom Objekt reflektierten Signalstrahls auf ein Minimum reduziert werden. Der elektrooptische Modulator wird nach einer weiteren Ausgestaltung insbesondere in Transversalgeometrie betrieben. D. h. die elektrisch ansteuerbaren Elektroden liegen in transversaler Richtung in Bezug auf die Strahlpropagation durch den Kristallkörpers an einer oder an gegenüberliegenden Außenoberflächen des Kristallkörpers an. Es ist prinzipiell denkbar, dass die beiden Elektroden an gegenüberliegenden Außenseiten des Kristallkörpers anliegen, sodass sich die elektrischen Feldlinien zwischen den Elektroden transversal, d. h. senkrecht zur Propagationsrichtung des Signalstrahls durch den Kristallkörpers erstrecken.

Nach einer weiteren Ausgestaltung liegen die Elektroden an einer gemeinsamen Oberfläche des Kristallkörpers an. Sie können beispielsweise an einer gemeinsamen Oberseite des Kristallkörpers anliegen. Die beiden Elektroden liegen typischerweise an derselben Oberfläche des Kristallkörpers an. Eine derartige Anordnung kann sich insbesondere in Kombination mit dem Wellenleiter, welcher sich durch den Kristallkörper erstreckt, als vorteilhaft erweisen. Auf diese Art und Weise kann sichergestellt werden, dass die zwischen den Elektroden verlaufenden elektrischen Feldlinien den Wellenleiter in transversaler Richtung kreuzen.

Nach einer weiteren Ausgestaltung grenzt der Wellenleiter an diejenige Oberfläche des Kristallkörpers an, an welcher die Elektroden anliegen. Ferner erstreckt sich der Wellenleiter entlang der Oberfläche des Kristallkörpers. Eine oberflächennahe Anordnung des Wellenleiters ist herstellungstechnisch vergleichsweise einfach zu verwirklichen. Dies gilt insbesondere wenn der Wellenleiter durch Eindiffusion, beispielsweise von Titan oder durch Protonenaustausch erzeugt wird. Es ist insbesondere vorgesehen, dass die Elektroden an derselben Seite des Kristallkörpers anliegen, entlang welcher sich auch der Wellenleiter erstreckt. Auf diese Art und Weise kann erreicht werden, dass sich die zwischen den Elektroden beispielsweise bogenförmig erstreckenden elektrischen Feldlinien transversal durch den Wellenleiter erstrecken. Somit kann eine geforderte Brechungsindexmodulation im Wellenleiter erzeugt werden, welche proportional mit der an den Elektroden anliegenden Spannung veränderbar ist.

Nach einer weiteren Ausgestaltung erstrecken sich die Elektroden parallel zueinander. Sie erstrecken sich ferner parallel zur Längsrichtung des Wellenleiters. Mithin erstrecken sich die Elektroden in Längsrichtung des Wellenleiters an der Oberfläche des Kristallkörpers. Eine parallele Erstreckung der Elektroden zueinander als auch zum Wellenleiter ermöglicht die Bildung eines konstanten elektrischen Feldes entlang des Wellenleiters. Eine Brechungsindexänderung bzw. Phasenmodulation kann auf diese Art und Weise durch die angelegte Spannung besonders gut modifiziert und kontrolliert werden.

Nach einer weiteren Ausgestaltung ist der Wellenleiter zwischen einer ersten Elektrode und einer zweiten Elektrode angeordnet. Mithin ist zum Beispiel eine symmetrische Anordnung des Wellenleiters zwischen den Elektroden vorgesehen. Der Wellenleiter kann sich in etwa mittig zwischen den beiden Elektroden befinden. Asymmetrische Ausgestaltungen, wobei der Wellenleiter näher an der ersten Elektrode als an der zweiten Elektrode angeordnet ist, oder umgekehrt, wobei der Wellenleiter näher an der zweiten Elektrode als an der ersten Elektrode angeordnet ist, sind ebenfalls denkbar.

Nach einer weiteren Ausgestaltung weist die Abstandsmessanordnung ferner einen Messkopf auf, in oder an welchem der Phasenmodulator angeordnet ist. Es ist insbesondere vorgesehen, den Phasenmodulator möglichst nahe zum Objekt zu platzieren. Zwischen dem Phasenmodulator und dem Objekt kann der Signalstrahl bzw. der vom Objekt reflektierte Signalstrahl frei propagieren. Indem der Phasenmodulator in einem Messkopfs angeordnet ist, welcher zum zu vermessenden Objekt ausgerichtet ist, kann die freie Propagationsstrecke des Signalstrahls und/oder des vom Objekt reflektierten Signalstrahls auf ein Minimum reduziert werden. Etwaige externe Störeinflüsse können auf diese Art und Weise minimiert werden.

Nach einer weiteren Ausgestaltung ist der Messkopf faseroptisch mit dem Multiplexer gekoppelt. Die Anbindung des Messkopfs an die Lichtquelle kann ferner ebenfalls faseroptisch ausgebildet sein. Die Lichtquelle kann mit dem Multiplexer faseroptisch gekoppelt sein. Ferner kann der Multiplexer mit dem Messkopf faseroptisch gekoppelt sein. Auch das Auskoppelelement kann faseroptisch implementiert sein, sodass der zumindest erste und der zumindest zweite Lichtstrahl, der hieraus gebildete Messstrahls als auch der Referenzstrahl gänzlich innerhalb einer oder mehrerer Glasfasern geführt sind.

Lediglich der vom Messstrahl ausgekoppelte Signalstrahl und der vom Objekt reflektierte Signalstrahl können frei propagieren. Das Auskoppelelement kann ebenfalls in den Messkopf integriert sein, sodass eine Aufteilung des Messstrahls in den Referenzstrahl und in den Signalstrahl erst im Messkopf selbst erfolgt. Dies ermöglicht eine vergleichsweise einfache und uneingeschränkte Handhabung des Messkopfs. Dieser kann aufgrund seiner faseroptischen Kopplung mit dem Multiplexer, der Lichtquelle als auch mit einer Detektoranordnung frei im Raum bewegt werden ohne dass dies nachteilige Auswirkungen auf die interferometrische und/oder wellenlängenselektiven Erfassung des Auswertestrahls hätte.

Nach einer weiteren Ausgestaltung der Abstandsmessanordnung weist der Messkopf eine Optik auf, mittels welcher der Signalstrahl zum Objekt richtbar ist und/oder ein vom Objekt reflektierter Signalstrahl in den Messkopf einkoppelbar ist. Von Vorteil ist die Optik sowohl zur Beaufschlagung des Objekts mit dem Signalstrahl als auch zum Einkoppeln des vom Objekt reflektierten Signalstrahls in den Messkopf ausgestaltet. Der Messkopf und seine Optik sind folglich zur Messung des Abstandes zwischen dem Messkopf und dem Objekt in Reflexionsgeometrie ausgestaltet. Die Verwendung und Implementierung lediglich einer einzigen Optik, beispielsweise einer Kollimationslinse ermöglicht eine in praktischer Hinsicht leicht handhabbare Positionierung des Messkopfs relativ zum Objekt. Mittels der Optik kann der Messkopf in einem praktikablen Abstand zum Objekt, beispielsweise in einem Abstand von mehreren Zentimetern platziert werden, sodass für die Abstandsmessung bzw. für ein Abscannen der Oberfläche des Objekts zu dessen Oberfläche-und/oder Topologievermessung der Objektoberfläche eine Berührung von Messkopf und Objekt sicher ausgeschlossen werden kann.

Nach einer weiteren Ausgestaltung ist der Phasenmodulator zwischen dem Auskoppelelement und der Optik im Signalpfad angeordnet. Es kann vorgesehen sein, das Auskoppelelement direkt eingangs des Phasenmodulators anzuordnen, um beispielsweise den über das Auskoppelelement vom Messstrahl ausgekoppelten Signalstrahl direkt und möglichst verlustfrei in den Phasenmodulator einzukoppeln. Es ist aber auch denkbar, dass der über das Auskoppelelement vom Messstrahl ausgekoppelte Signalstrahl eine gewisse Strecke frei propagiert und beispielsweise in ein dem Auskoppelelement zugewandtes Ende des Wellenleiters des Kristallkörpers eingekoppelt wird.

Nach einer weiteren Ausgestaltung der Abstandsmessanordnung weist diese ein Einkoppelelement auf, mittels welchem der Referenzstrahl und der vom Objekt reflektierte Signalstrahl zur Bildung eines Auswertestrahls miteinander kombinierbar sind. Der Referenzstrahl und der reflektierte Signalstrahl sind insbesondere räumlich überlagerbar, sodass diese beiden Strahlen kopropagierend von einer Detektoranordnung erfassbar bzw. detektierbar sind. Der aus dem Referenzstrahl und dem reflektierten Signalstrahl gebildete Auswertestrahl bildet ein Interferenzmuster, welches sich mit dem Abstand zwischen dem Auskoppelelement und dem Objekt ändert. Die Vermessung bzw. die datentechnische Erfassung der Interferenz zwischen dem Referenzstrahl und des vom Objekt reflektierten Signalstrahls ermöglicht eine Bestimmung des Abstandes zwischen dem Auskoppelelement und der den Signalstrahl reflektierenden Oberfläche des Objekts.

Nach einer weiteren Ausgestaltung weist die Abstandsmessanordnung ferner eine Detektoranordnung zur interferometrischen und/oder wellenlängenselektiven Erfassung des Auswertestrahls auf. Die Detektoranordnung kann insbesondere einen Demultiplexer aufweisen, mittels welchem der zumindest erste und der zumindest zweite Lichtstrahl unterschiedlicher Wellenlänge voneinander separierbar sind. Der Referenzstrahl umfasst zumindest einen ersten und einen zweiten Teil-Referenzstrahl bei jeweils einer ersten Wellenlänge und einer zweiten Wellenlänge. Gleiches gilt für den Signalstrahl und für den vom Objekt reflektierten Signalstrahl. Ein Teil-Signalstrahl der ersten Wellenlänge interferiert mit dem Teil-Referenzstrahl der ersten Wellenlänge. Der Teil-Signalstrahl der zweiten Wellenlänge interferiert mit dem Teil-Referenzstrahl der zweiten Wellenlänge usw. Auch dritte und vierte Teil-Signalstrahl der dritten und vierten Wellenlängen, die sich von den ersten und zweiten Wellenlängen unterscheiden, können jeweils mit dritten und vierten Teil-Referenzstrahlen dritter und vierter Wellenlängen interferieren.

Mittels des Demultiplexers und der nachgeschalteten Detektoranordnung können die entsprechenden Auswertestrahlen, mithin die unterschiedlichen spektralen Anteile des Auswertestrahls separat und daher wellenlängenselektiv erfasst werden. Die Detektoranordnung kann insoweit mehrere optische Detektoren, beispielsweise Photodioden oder dergleichen optisch sensitive Sensoren aufweisen, welche jeweils dazu ausgebildet sind, die Interferenz des Auswertestrahls bezüglich einer vorgegebenen Wellenlänge zu detektieren.

Durch das gleichzeitige interferometrische und/oder wellenlängenselektive Erfassen einer Vielzahl unterschiedlicher Wellenlängen oder spektralen Anteile des Auswertestrahls kann die Abstandsmessanordnung einen vergleichsweise großen Messbereich aufweisen. Die Kombination mehrerer Interferenzmuster auf Basis unterschiedlicher Wellenlängen vergrößert den Messbereich der Abstandsmessanordnung auf mehrere Zentimeter. Insoweit kann die Abstandsmessanordnung als Heterodyn-Interferometer ausgestaltet sein.

Für die Ermittlung des Abstandes zu einem Objekt sind zwar mehrere Lichtstrahlen unterschiedlicher Wellenlänge vorgesehen. Die Interferenzen der einzelnen Lichtstrahlen werden jedoch separat gemessen und detektiert. Für die Bestimmung des Abstandes zum Objekt werden die einzelnen auf Basis unterschiedlicher Wellenlängen gemessenen Interferenzen miteinander kombiniert.

Nach einem weiteren Aspekt ist ferner ein Verfahren zur Bestimmung eines Abstandes zu einem Objekt vorgesehen. Das Verfahren umfasst hierbei die Schritte der Erzeugung zumindest eines ersten monochromatischen und interferenzfähigen Lichtstrahls einer ersten Wellenlänge sowie den Schritt der Erzeugung zumindest eines zweiten monochromatischen und interferenzfähigen Lichtstrahls einer zweiten Wellenlänge. Die erste und die zweiten Wellenlänge sind dabei unterschiedlich. In einem weiteren Schritt werden der zumindest erste Lichtstrahl und der zumindest zweite Lichtstrahl in einem gemeinsamen Messstrahl miteinander kombiniert oder miteinander gekoppelt. Der gemeinsame Messstrahl enthält somit mehrere spektrale und für sich betrachtet interferenzfähige Anteile.

Der Messstrahl wird anschließend in einen Referenzstrahl und in einen Signalstrahl räumlich aufgeteilt. Der Referenzstrahl propagiert entlang eines Referenzpfads und der Signalstrahl propagiert entlang eines Signalpfads. Das Verfahren umfasst ferner ein zeitlich periodisches Modulieren der Phase des Signalstrahls mittels eines Phasenmodulators. Der Phasenmodulator ist im Signalpfad angeordnet.

Typischerweise umfasst das Verfahren noch weitere Schritte, die bei Verwendung der zuvor beschriebenen Abstandsmessanordnung zwangsläufig durchgeführt werden. Es ist insbesondere vorgesehen, dass das Verfahren unter Verwendung der zuvor beschriebenen Abstandsmessanordnung durchgeführt wird und dass die zuvor beschriebene Abstandsmessanordnung zur Durchführung des hier beschriebenen Verfahrens ausgebildet ist. Insoweit treffen sämtliche zuvor beschriebenen Merkmale, Vorteile und erläuterten Funktionen der Abstandsmessanordnung gleichermaßen für das hier vorgesehene Verfahren zu; und umgekehrt.

Das Verfahren kann ferner ein Kombinieren eines vom Objekt reflektierten Signalstrahls mit dem Referenzstrahl zur Bildung eines Auswertestrahls umfassen. Der reflektierte Signalstrahl kann ebenfalls durch den Phasenmodulator propagieren und demgemäß eine weitere Phasenmodulation erhalten. Der so gebildete Auswertestrahl kann schließlich in seine einzelnen spektralen Komponenten, welche für sich betrachtet interferenzfähig sind, aufgeteilt werden. Die einzelnen spektralen Anteile des Auswertestrahls können alsdann mittels gesonderter Detektoren detektiert werden.

Die Detektoren sind typischerweise zur Messung einer Intensität des Auswertestrahls bzw. seiner spektralen Komponenten ausgebildet. Der Auswertestrahl trägt ferner ein Interferenzmuster bzw. eine Phaseninformation zwischen dem Referenzstrahl und dem reflektierten Signalstrahl. Indem die Phase des Signalstrahls zeitlich periodisch mittels des Phasenmodulator so moduliert, d. h. geändert wird, ist diese Änderung auch am Detektor der Detektoranordnung erkennbar.

Es ist nach einer weiteren Ausgestaltung insbesondere vorgesehen, dass der Auswertestrahl bzw. seine spektralen Komponenten zeitlich gemittelt bzw. über einen vorgegebenen Zeitraum erfasst werden während die Phase des Signalstrahl moduliert wird. Die zeitlich gemittelte und mittels der Detektoren erfasse Intensität des Auswertestrahl ermöglicht somit eine besonders präzise Messung der relativen Phasenlage zwischen dem reflektierten Signalstrahl und dem Referenzstrahl. Die Präzision der Phasenmessung und damit auch die Präzision der Abstandsmessung kann auf diese Art und Weise gesteigert werden.

Die mittels des Phasenmodulators konkret vorgenommene Phasenmodulation ist einer Steuerung der Abstandsmessanordnung natürlich bekannt. Sie wird bei der interferometrischen und/oder wellenlängenselektiven Erfassung und Auswertung des Auswertestrahl berücksichtigt.

Nach einem weiteren Aspekt betrifft die Erfindung ferner ein Computerprogramm zur Bestimmung eines Abstandes zu einem Objekt. Das Computerprogramm ist dabei von einer Auswerteeinheit oder von einer Steuerung ausführbar, die datentechnisch mit einer zuvor beschriebenen Abstandsmessanordnung gekoppelt ist. Das Computerprogramm umfasst Programmmittel zum Ansteuern eines Phasenmodulators, welcher im Signalpfad der Abstandsmesseinrichtung angeordnet ist.

Die Programmmittel zum Ansteuern des Phasenmodulators sind dazu ausgestaltet, die Phase des Signalstrahls zeitlich periodisch zu modulieren. Die Programmmittel sind insbesondere dazu ausgebildet, die Phase des Signalstrahls kontinuierlich und stetig zu modulieren. Beispielsweise sind die Programmmittel dazu ausgestaltet, die Phase des Signalstrahls sinusförmig und/oder zeitlich periodisch zu modulieren. Das Computerprogramm umfasst ferner Programmmittel zur interferometrischen und/oder wellenlängenselektiven Auswertung eines mittels einer Detektoranordnung erfassten Auswertestrahls. Insbesondere ist das Programmmittel für die Auswertung des erfassten Auswertestrahl dazu ausgestaltet, ein an einem Detektor der Detektionseinrichtung vorliegendes Intensitätssignal über die Zeit zu integrieren und schließlich über die Zeit zu mitteln. Ein über die Zeit integriertes Detektionssignal ist schließlich für die relative Phasenlage zwischen den jeweiligen spektralen Anteilen des reflektierten Signalstrahls und des Referenzstrahls kennzeichnend.

Das Computerprogramm ist insbesondere von der Auswerteeinheit oder der Steuerung der zuvor beschriebenen Abstandsmessanordnung durchführbar. Insoweit gelten sämtliche zuvor beschriebenen Merkmale, Vorteile und Funktionen der Abstandsmessanordnung auch gleichermaßen für das Computerprogramm; und umgekehrt.

Kurzbeschreibung der Figuren

Weitere Ziele, Merkmale sowie vorteilhafte Ausgestaltungen der Abstandsmessanordnung, des Verfahrens zur Bestimmung eines Abstandes zu einem Objekt sowie des Computerprogramms werden in der nachfolgenden Beschreibung eines Ausführungsbeispiels erläutert. Hierbei zeigen:

Fig. 1 ein Blockschaltbild der Abstandsmessanordnung,

Fig. 2 eine schematische Darstellung eines einen Kristallkörper aufweisenden Phasenmodulators, welcher als elektrooptischer Modulators ausgestaltet ist,

Fig. 3 eine schematische und perspektivische Darstellung eines Messkopfs der Abstandsmessanordnung,

Fig. 4 der Messkopf gemäß Fig. 3 in Seitenansicht,

Fig. 5 eine Draufsicht auf den Messkopf gemäß der Figuren 3 und 4 von oben,

Fig. 6 einen Querschnitt entlang A-A gemäß Fig. 5 durch den Kristallkörper und

Fig. 7 ein Flussdiagramm des Verfahrens zur Bestimmung eines Abstandes zu einem Objekt.

Detaillierte Beschreibung

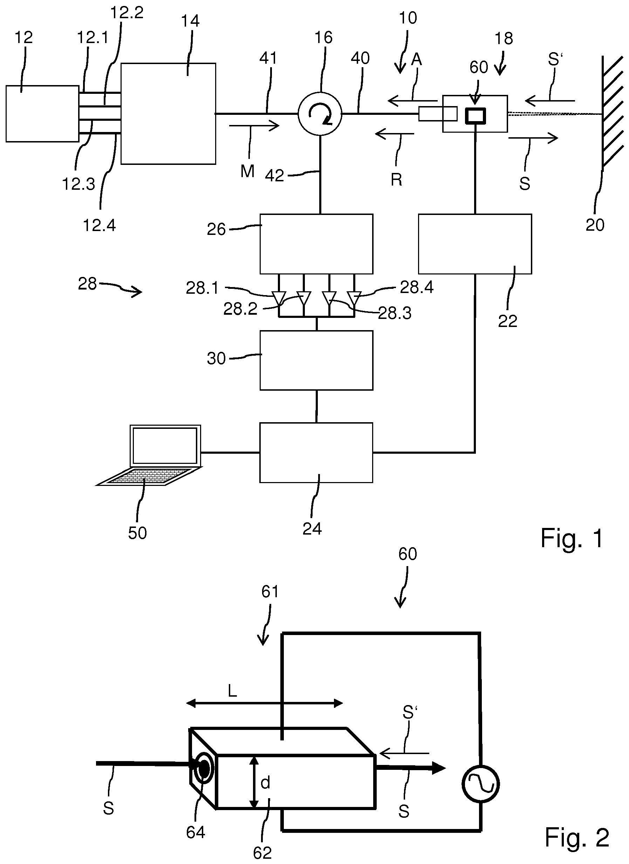

Im Blockschaltbild der Fig. 1 ist eine Abstandsmessanordnung 10 schematisch dargestellt. Die Abstandsmessanordnung 10 ist als Mehrwellenlängeninterferometer ausgestaltet. Die Abstandsmessanordnung 10 weist eine Lichtquelle 12 zur Erzeugung zumindest eines ersten monochromatischen interferenzfähigen Lichtstrahls 12.1 und zumindest eines zweiten monochromatische und interferenzfähigen Lichtstrahls 12.2 ausgestaltet. Der erste Lichtstrahl 12.1 und der zweite Lichtstrahl 12.2 weisen je eine erste und eine zweite Wellenlänge auf, die unterschiedlich sind.

Die Lichtquelle 12 kann insbesondere zur Erzeugung weiterer monochromatischer und interferenzfähiger Lichtstrahlen, beispielsweise eines dritten Lichtstrahls 12.3 sowie eines vierten Lichtstrahls 12.4 ausgebildet sein. Die Lichtquelle 12 selbst kann hierzu mehrere Laserlichtquellen aufweisen, welche jeweils zur Erzeugung des zumindest ersten, zweiten aber auch zumindest eines dritten und/oder vierten Lichtstrahls unterschiedlicher Wellenlänge ausgebildet sind. Die Wellenlängen der von der Lichtquelle 12 erzeugbaren interferenzfähigen Lichtstrahlen liegen typischerweise im Infrarotbereich. Sie können in einem Bereich zwischen 1520 nm und 1630 nm liegen.

Die Abstandsmessanordnung 10 weist ferner einen Multiplexer 14 auf, mittels welchem die unterschiedlichen Lichtstrahlen 12.1, 12.2, 12.3, 12.4 in einen gemeinsamen Messstrahl M eingekoppelt oder zu einem gemeinsamen Messstrahl M kombinierbar sind. Der gemeinsame Messstrahl M kann zumindest zwei monochromatische und für sich betrachtet interferenzfähige Spektralanteile aufweisen. Die Lichtquelle 12 kann ebenfalls faseroptisch mit dem Multiplexer 14 gekoppelt sein.

Insbesondere kann der gemeinsame Messstrahl M bis zu vier unterschiedliche und jeweils interferenzfähige Spektralanteile aufweisen. Der Multiplexer 14 kam faseroptisch mit der Lichtquelle 12 gekoppelt sein. Insbesondere kann der Multiplexer 14 faseroptisch implementiert sein. Der Ausgang des Multiplexers 14 kann eine einzige Glasfaser 41 aufweisen, die in einen Koppler 16 mündet. Auch der Koppler 16 kann faseroptisch konzipiert sein. Er kann beispielsweise einen faseroptischen Zirkulator umfassen. Ein Ausgang des Kopplers 16 ist über eine Faser 40 mit einem Messkopfs 18 optisch gekoppelt. Für andersartige Ausgestaltungen der Abstandsmessanordnung kann der Koppler 16 auch als teilreflektierender Spiegel oder als Strahlteiler ausgestaltet sein.

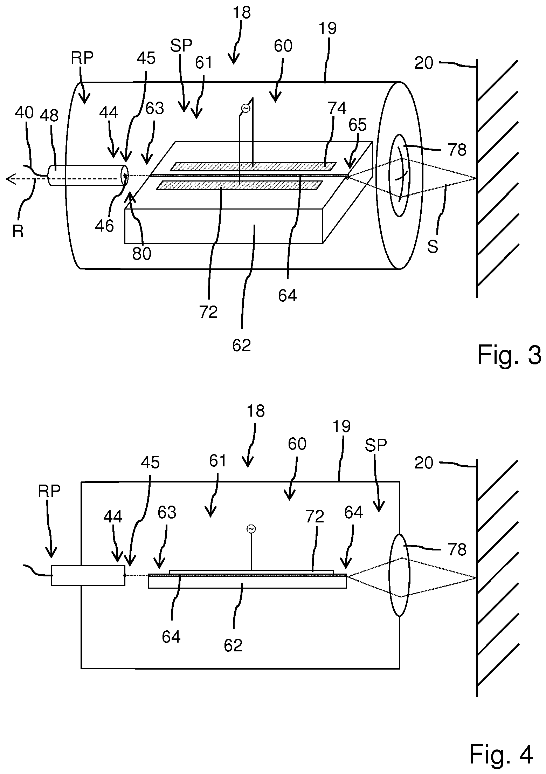

Ein weiterer Ausgang des Kopplers 16 ist über eine Glasfaser 42 mit einer Detektoranordnung 28 optisch gekoppelt. Der Messkopf 18 ist in den Figuren 3 bis 5 näher skizziert. Der Messkopfs 18 weist ein Gehäuse 19 auf. Die Glasfaser 40, welche mit einem Ende mit dem Koppler 16 verbunden ist mündet in das Innere des Gehäuses 19 des Messkopfs 18. Für einen definierten Anschluss kann die Faser 40 eine Fasermuffe 48 aufweisen.

Die Glasfaser 40 endet innerhalb des Gehäuses 19 des Messkopfs 18. Sie kann ein Faserende 44 aufweisen, welches in der Fasermuffe 48 fixiert ist. Die Fasermuffe 48 kann ferner fest mit dem Gehäuse 19 des Messkopfs 18 verbunden sein. Das Faserende 44 weist eine Faserendfläche 46 auf. Die Faserendfläche 46 fungiert vorliegend sowohl als Auskoppelelement 45 als auch als Einkoppelelement 80. Das Faserende 44 bzw. die Faserendfläche 46 separiert sozusagen den vom Koppler 16 ankommenden Messstrahl M in einem Signalstrahl S und in einen Referenzstrahl R. Der Referenzstrahl wird von der Faserendfläche 46 zurückreflektiert. Er propagiert folglich entlang eines Referenzpfad RP zurück durch die Glasfaser 40 in den Koppler 16.

Der aus dem Faserende 44 und somit von der Faserendfläche 46 austretende Signalstrahl S propagiert entlang eines Signalpfads SP und durch einen Phasenmodulator 60. Ausgangs des Phasenmodulator weist der Sensorkopf 18 eine Optik 78, beispielsweise in Form einer Linse oder eines Linsensystems auf, mittels welcher der Signalstrahl S auf eine reflektierende Oberfläche des Objekts 20 fokussierbar ist. Von dort wird der Signalstrahl S zumindest zum Teil reflektiert. Der vom Objekt 20 reflektierte Signalstrahl S' kann über die Optik 78 wieder in entgegengesetzter Richtung zum ursprünglichen Signalstrahl S in den Phasenmodulator 60 eingekoppelt werden und in entgegengesetzter Richtung zum ursprünglichen Signalstrahl S durch den Phasenmodulator 60 propagieren.

Alsdann kann der reflektierte Signalstrahl S' über ein Einkoppelelement 80 wieder in die Glasfaser 40 eingekoppelt werden. In der Glasfaser können der Referenzstrahl R und der reflektierte Signalstrahl S' miteinander interferieren. Dass sich hierbei ergebende Interferenzmuster bzw. die relative Phasenlage zwischen dem reflektierten Signalstrahl S' und dem Referenzstrahl R gibt Aufschluss über den Abstand zwischen dem Auskoppelelement 45 und der reflektierenden Oberfläche des Objekts 20.

Das Einkoppelelement 80 kann ebenfalls von der Faserendfläche 46 verwirklicht sein. In der vorliegenden Ausgestaltung fungiert die Faserendfläche 46 sowohl als Auskoppelelement 45 als auch als Einkoppelelement mittels welcher ausgehend von einer Messstrahl M ein Referenzstrahl R und ein Signalstrahl S voneinander separiert und mittels welchem ein reflektierte Signalstrahl S' wieder mit dem Referenzstrahl kombiniert werden kann. Die vorliegende Ausgestaltung ist rein exemplarisch. Es sind mannigfaltige andere Ausgestaltung oder andere Interferometer-Implementierungen für die Abstandsmessanordnung 10, beispielsweise nach dem Mach-Zehnder oder Michelson-Prinzip denkbar.

Der Referenzstrahl, welcher entlang des Referenzpfads RP von dem Auskoppelelement 45 bzw. von der Faserendfläche 46 durch die Glasfaser 40 in Richtung zum Koppler 16 propagiert, wird mit dem von der Oberfläche des Objekts 20 reflektierten Signalstrahl S', welcher entlang des Signalpfad SP propagiert überlagert. Die Überlagerung des Referenzstrahls R und des vom Objekt 20 reflektierten Signalstrahl S' wird nachfolgend als Auswertestrahl A bezeichnet.

Der Auswertestrahl A propagiert in der Glasfaser 40 vom Messkopf 18 zum Koppler 16. Im Koppler 16 wird der Auswertestrahl A über die weitere Glasfaser 42 zur Detektoranordnung 28 geleitet. Die Detektoranordnung 28 weist einen Demultiplexer 26 auf, welcher die interferenzfähigen Spektralanteile des Auswertestrahls A räumlich separiert und diese einzeln den nachgeschalteten Detektoren 28.1, 28.2, 28.3, 28.4 zuführt. So kann der Detektor 28.1 auf die erste Wellenlänge des ersten Lichtstrahls 12.1 abgestimmt sein. Der weitere Detektor 28.2 kann auf die zweite Wellenlänge des zumindest zweiten Lichtstrahls 12.2 abgestimmt sein. Gleiches gilt für den dritten Detektor 28.3 und für den vierten Detektor 28.4. Die Wellenlängen bzw. die spektralen Anteile des Auswertestrahls, welche jeweils gesondert von den einzelnen Detektoren 28.1, 28.2, 28.3 und 28.4 detektierbar und messbar sind entsprechen den Wellenlängen der von der Lichtquelle 12 erzeugten Lichtstrahlen.

Die Detektoranordnung 28 weist ferner eine Datenerfassungseinheit 30 auf, welche die Signale der einzelnen Detektoren 28.1, 28.2, 28.3, 28.4 messtechnisch aufbereitet. Die Datenerfassungseinheit 30 kann beispielsweise als FPGA (Field Programmable Gate Array), d. h. als feldprogrammierbares Gitter ausgestaltet sein. Die Datenerfassungseinheit weist typischerweise einen oder mehrere Analog-DigitalWandler auf, mittels welchen die von den einzelnen Detektoren 28.1, 28.2, 28.3 oder 28.4 erzeugbaren analogen Signale in digitale Signale unwandelbar sind.

Sind insgesamt beispielsweise vier interferenzfähige Lichtstrahlen 12.1, 12.2, 12.3, 12.4 unterschiedlichen Wellenlängen vorgesehen so gibt es jeweils vier spektrale Anteile bzw. vier Teilstrahlen des Messstrahls. Mithin weist auch der Referenzstrahl vier einzelne Teilstrahlen mit jeweils unterschiedlicher Wellenlänge auf. Selbiges trifft für den Signalstrahl und für den vom Objekt reflektierten Signalstrahl zu. Der Auswertestrahl kann alsdann ebenfalls vier Paare von miteinander interferierenden Teilstrahlen des Referenzstrahls und des reflektierten Signalstrahls umfassen.

Die Datenerfassungseinheit 30 ist ferner mit einer Steuerung 24 der Abstandsmessanordnung 10 gekoppelt. Die Steuerung 24 ist mit einem Verstärker 22 gekoppelt, welcher wiederum ein Steuersignal für den Phasenmodulator 60 verstärkt. Die Steuerung 24 ist zur Erzeugung eines Steuersignals für den Phasenmodulator 60 ausgestaltet. Die Steuerung 24 ist ferner mit einer externen Auswerteeinheit 50 datentechnisch koppelbar. Die externe Auswerteeinheit 50 kann beispielsweise als Computer, so z.B. als Tablet PC ausgebildet sein. Die externe Auswerteeinheit 50 kann ferner auch direkt mit der Datenerfassungseinheit 30 gekoppelt sein, um die von der Datenerfassungseinheit 30 aufgenommenen Datensignale zu verarbeiten.

Die Steuerung 24 ist insbesondere zur Erzeugung eines zeitlich periodisch variierenden Steuersignals ausgestaltet, welches mittels des Verstärkers 22 hinsichtlich seiner Signalamplitude verstärkt wird. Das verstärkte Steuersignal wird dem Phasenmodulator 60 zugeführt, um die Phase des Signalstrahl S bzw. des reflektierten Signalstrahl S' zeitlich periodisch zu variieren bzw. zu modulieren. Während der zeitlichen Modulation findet keine oder nur eine vernachlässigbare Relativbewegung zwischen dem Messkopf 18 und dem Objekt 20 statt. Die Phasenmodulation führt zu einer sich periodisch ändernden Intensitätsverteilung an den Detektoren 28.1, 28.2, 28.3, 28.4. Über eine zeitliche Mittelung der Intensitätsmodulation an den Detektoren kann die genaue Phasenlage für die betreffende Wellenlänge bzw. für die betreffende Lichtstrahlen unterschiedlicher Wellenlänge bestimmt werden.

In Fig. 2 ist schematisch die Funktionsweise des Phasenmodulator 60 skizziert. Der Phasenmodulator 60 ist als elektrooptischer Modulator 61 ausgestaltet. Er weist einen Kristallkörpers 62 mit einem sich in Längsrichtung durch den Kristallkörper 62 erstreckenden Wellenleiter 64 auf. Der von links auf den Kristallkörpers 62 auftreffende Signalstrahl propagiert in Längsrichtung durch den Kristallkörpers 62. In transversaler Richtung, d. h. senkrecht zur Propagationsrichtung des Signalstrahl S wird an den Kristallkörpers 62 ein elektrisches Feld angelegt. Die elektrooptische Modulation führt zu einer Brechungsindexänderung entlang des Wellenleiters 64 gemäß der folgenden Gesetzmäßigkeit:

$$\varphi(t) = (2\pi/\lambda) \, L \, \Delta n(t) = (\pi/\lambda) \, n^{\,3} \, r \, V(t) \, (L/d),$$

mit $\lambda$ als Wellenlänge des Lichtstrahls, V(t) einer von der Steuerung 24 erzeugten zeitlich variierenden Spannung, mit d als dem Abstand zwischen den Elektroden, L der Länge der Propagationsstrecke des Lichtstrahls durch den Kristallkörper und $\Delta n(t)$ als der spannungsinduzierten Änderung des Brechungsindex. Diese bestimmt sich aus n, dem unmodifizierten Brechungsindex des Materials in der jeweils gewählten Geometrie, wobei r den effektiven elektrooptischen Tensor des Kristallkörpers darstellt, welcher von der jeweiligen Kristallausrichtung abhängt.

In der Darstellung gemäß der Figuren 3 bis 6 ist ferner gezeigt, dass der Wellenleiter 64 an einer Außenoberfläche, mithin an einer Oberseite 66 des Kristallkörpers 62 ausgebildet bzw. angeordnet ist. In Propagationsrichtung betrachtet links und rechts vom Wellenleiter 64 befinden sich zwei Elektroden 72, 74, welche sich zueinander parallel als auch parallel zum Wellenleiter 64 erstrecken. Die Elektroden 72, 74 erstrecken sich in etwa entlang der gesamten Längserstreckung des Wellenleiters. Der Wellenleiter 64 erstreckt sich insbesondere durch den gesamten Kristallkörper 62. Er weist ein dem Faserende 44 zugewandtes Ende 63 auf, welches in eine dem Faserende 44 zugewandte Stirnfläche des Kristallkörpers 62 mündet. Gegenüberliegend weist der Wellenleiter 64 ein der Optik 78 zugewandtes Ende 65 auf, welches in eine der Optik 78 zugewandte Stirnfläche des Kristallkörpers 62 mündet.

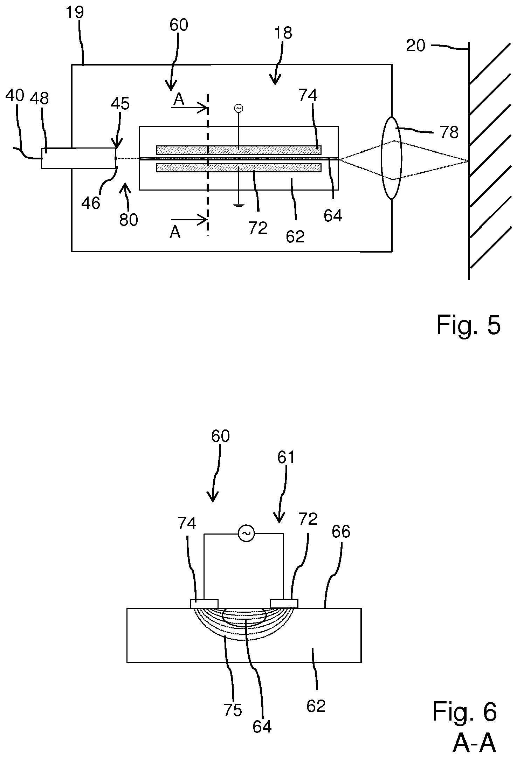

Der Wellenleiter 64 und die beiden Elektroden 72, 74 befinden sich an ein und derselben Oberfläche 66 des Kristallkörpers 62. Wie insbesondere im Querschnitt gemäß Fig. 6 gezeigt können die sich in etwa bogenförmig zwischen den Elektroden 72, 74 erstreckenden elektrischen Feldlinien 75 in etwa transversal durch den Wellenleiter 64 erstrecken. D. h. die Richtung der Feldlinien 75 verläuft in etwa senkrecht zur Längsrichtung des Wellenleiters 64.

Durch Anlegen einer Wechselspannung an die Elektroden 72, 74 kann nahezu ohne Zeitverzögerung eine entsprechende Phasenmodulation auf den Signalstrahl S bzw. den reflektierten Signalstrahl S' aufmoduliert werden. Mittels des elektrooptischen Phasenmodulators 60 können Modulationsfrequenzen im Bereich oberhalb von 1 kHz, oberhalb von 2 kHz, oberhalb von 5 kHz oder auch oberhalb von 10 oder 100 kHz realisiert werden. Die Messgenauigkeit und Messgeschwindigkeit, insbesondere für das Abscannen einer Oberfläche des Objekts 20 können auf diese Art und Weise gesteigert werden. Eine Modulationsfrequenz von mehr als 1 kHz oder mehreren Kilohertz ermöglicht ein zügiges Abscannen einer Oberfläche des Objekts 20. Der Abstand zu einzelnen Messpunkten auf der Oberfläche des Objekts kann mit größer werdender Modulationsfrequenz zügiger ermittelt werden. Insofern erlaubt die Steigerung der Modulationsfrequenz der Phasenmodulation eine Steigerung der Geschwindigkeit einer abscannenden Bewegung des Messkopfs 18 relativ zum Objekt 20, etwa um dessen Oberfläche zu vermessen.

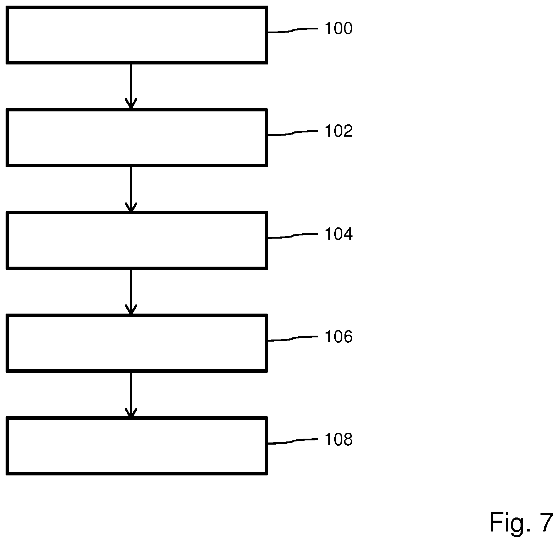

In Fig. 7 ist schließlich ein Flussdiagramm des Verfahrens zur Bestimmung eines Abstandes zu einem Objekt 20 schematisch dargestellt. In einem ersten Schritt 100 wird beispielsweise mittels der Lichtquelle 12 zumindest ein erster monochromatischer und interferenzfähiger Lichtstrahl 12.1 einer ersten Wellenlänge erzeugt. Im nachfolgenden Schritt 102 wird gleichzeitig hierzu zumindest ein zweiter monochromatischer und interferenzfähiger Lichtstrahl einer zweiten Wellenlänge erzeugt, wobei sich die zweite Wellenlänge von der ersten Wellenlänge unterscheidet.

Im nachfolgenden Schritt 104 werden der erste Lichtstrahl und der zweite Lichtstrahl zur Bildung eines gemeinsamen Messstrahls gekoppelt oder kombiniert bzw.

überlagert. Der so gebildete Messstrahl wird im nachfolgenden Schritt 106 in einen Referenzstrahl R und in einen Signalstrahl aufgeteilt. Der Referenzstrahl propagiert entlang eines Referenzpfad RP und der Signalstrahl S propagiert entlang eines Signalpfad SP. Der Signalstrahl wird im weiteren Schritt 108 mittels des Phasenmodulators zeitlich periodisch hinsichtlich seiner Phasenlage moduliert.

Weitere optionale Verfahrensschritte sehen gemäß der bestimmungsgemäßen Verwendung der zuvor beschriebenen Abstandsmessanordnung 10 vor, den vom Objekt 20 reflektierten Signalstrahl S' mit dem Referenzstrahl R zu überlagern und hierdurch einen ein Interferenzmuster beinhaltenden Auswertestrahl A zu erzeugen.

Der Auswertestrahl A wird hinsichtlich seiner spektralen Anteile entsprechend der zumindest ersten und zweiten unterschiedlichen Wellenlängen wieder räumlich aufgeteilt. Die einzelnen spektralen Anteile werden alsdann gesondert mittels einer Detektoranordnung 28 detektiert. Hierbei werden die jeweiligen Intensitäten am Detektor gemessen während der Signalstrahl nach wie vor zeitlich periodisch moduliert wird. Dies führt zu einer entsprechenden Modulation der an den einzelnen Detektoren messbaren Lichtintensität. Über eine zeitliche Mittelung kann schließlich eine präzise Aussage über die relative Phasenlage des jeweiligen spektralen Anteils von reflektiertem Signalstrahl und Referenzstrahl getroffen werden, die wiederum Rückschlüsse über den absoluten Abstand zwischen dem Auskoppelelement 45 und der Oberfläche des Objekts 20 ermöglicht.

Bezugszeichenliste

| | |
|---|---|
| 10 | Abstandsmessanordnung |
| 12 | Lichtquelle |
| 14 | Multiplexer |
| 16 | Koppler |
| 18 | Kopf |
| 19 | Gehäuse |
| 20 | Objekt |
| 22 | Verstärker |
| 24 | Steuerung |
| 26 | Demultiplexer |
| 28 | Detektoranordnung |
| 28.1 | Detektor |
| 28.2 | Detektor |
| 28.3 | Detektor |
| 28.4 | Detektor |
| 30 | Erfassungseinheit |
| 40 | Glasfaser |
| 41 | Glasfaser |
| 42 | Glasfaser |
| 44 | Faserende |
| 45 | Auskoppelelement |
| 46 | Faserendfläche |
| 48 | Fasermuffe |
| 50 | Auswerteeinheit |
| 60 | Phasenmodulator |
| 61 | elektrooptischer Modulator |
| 62 | Kristallkörpers |
| 63 | Ende |
| 64 | Wellenleiter |
| 65 | Ende |
| 66 | Oberfläche |
| 72 | Elektrode |
| 74 | Elektrode |
| 75 | Feldlinien |
| 78 | Optik |
| 80 | Einkoppelelement |

**Patentansprüche**

1. Abstandsmessanordnung zur Bestimmung eines Abstandes zu einem Objekt (20), wobei die Abstandsmessanordnung folgendes umfasst:

- zumindest eine Lichtquelle (12) zur Erzeugung zumindest eines ersten monochromatischen und interferenzfähigen Lichtstrahls (12.1) einer ersten Wellenlänge und zur Erzeugung zumindest eines zweiten monochromatischen und interferenzfähigen Lichtstrahls (12.2) einer zweiten Wellenlänge,
- einen Multiplexer (14) zum Koppeln oder Kombinieren des zumindest ersten Lichtstrahls (12.1) und des zumindest zweiten Lichtstrahls (12.2) in einen gemeinsamen Messstrahl (M),
- einem Auskoppelelement (45) zum Aufteilen des Messstrahls (M) in einen Referenzstrahl (R) und in einen Signalstrahl (S), wobei der Referenzstrahl (R) entlang eines Referenzpfads (RP) und wobei der Signalstrahl (S) entlang eines Signalpfads (SP) propagiert,
- einen Phasenmodulator (60), welcher im Signalpfad (SP) angeordnet ist und welcher dazu ausgestaltet ist, die Phase des Signalstrahls (S) zeitlich periodisch zu modulieren.

2. Abstandsmessanordnung nach Anspruch 1, wobei der Phasenmodulator (60) einen elektrooptischen Modulator (61) aufweist.

3. Abstandsmessanordnung nach Anspruch 2, wobei der elektrooptische Modulator (61) einen Kristallkörper (62) und zumindest zwei elektrisch mit dem Kristallkörper (62) verbundene elektrisch ansteuerbare Elektroden (72, 74) aufweist.

4. Abstandsmessanordnung nach Anspruch 3, wobei der Kristallkörper einen Lithiumniobat Kristall, einen Kaliumdihydrogenphosphat Kristall oder einen Galliumarsenid Kristall aufweist.

5. Abstandsmessanordnung nach Anspruch 3 oder 4, wobei der Kristallkörper (62) einen Wellenleiter (64) aufweist.

6. Abstandsmessanordnung nach einem der vorhergehenden Ansprüche 3 bis 5, wobei die Elektroden (72, 74) an einer gemeinsamen Oberfläche (66) des Kristallkörpers (62) anliegen.

7. Abstandsmessanordnung nach Anspruch 5 und 6, wobei sich die Elektroden (72, 74) parallel zueinander und entlang einer Längsrichtung des Wellenleiters (64) erstrecken.

8. Abstandsmessanordnung nach einem der vorhergehenden Ansprüche, welche ferner einen Messkopf (18) aufweist, in oder an welchem der Phasenmodulator (60) angeordnet ist.

9. Abstandsmessanordnung nach Anspruch 8, wobei der Messkopf (18) faseroptisch mit dem Multiplexer (14) gekoppelt ist.

10. Abstandsmessanordnung nach Anspruch 8 oder 9, wobei der Messkopf (18) eine Optik (78) aufweist, mittels welcher der Signalstrahl (S) zum Objekt (20) richtbar ist und/oder ein vom Objekt (20) reflektierter Signalstrahl (S') in den Messkopf (18) einkoppelbar ist.

11. Abstandsmessanordnung nach Anspruch 10, wobei der Phasenmodulator (60) zwischen dem Auskoppelelement (45) und der Optik (78) im Signalpfad (SP) angeordnet ist.

12. Abstandsmessanordnung nach einem der vorhergehenden Ansprüche, welche ferner ein Einkoppelelement (80) aufweist, mittels welchem der Referenzstrahl (R) und der vom Objekt (20) reflektierte Signalstrahl (S') zur Bildung eines Auswertestrahls (A) miteinander kombinierbar sind.

13. Abstandsmessanordnung nach einem der vorhergehenden Ansprüche, welche ferner eine Detektoranordnung (28) zur interferometrischen und/oder wellenlängenselektiven Erfassung des Auswertestrahls (A) aufweist.

14. Verfahren zur Bestimmung eines Abstandes zu einem Objekt (20), mit den Schritten:

- Erzeugung zumindest eines ersten monochromatischen und interferenzfähigen Lichtstrahls (12.1) einer ersten Wellenlänge,
- Erzeugung zumindest eines zweiten monochromatischen und interferenzfähigen Lichtstrahls (12.2) einer zweiten Wellenlänge,
- Koppeln oder Kombinieren des zumindest ersten Lichtstrahls (12.1) und des zumindest zweiten Lichtstrahls (12.2) in einen gemeinsamen Messstrahl (M),
- Aufteilen des Messstrahls (M) in einen Referenzstrahl (R) und in einen Signalstrahl (S), wobei der Referenzstrahl (R) entlang eines Referenzpfads (RP) und wobei der Signalstrahl (S) entlang eines Signalpfads (SP) propagiert,
- zeitlich periodisches Modulieren der Phase des Signalstrahls (S) mittels eines Phasenmodulators (60), welcher im Signalpfad (SP) angeordnet ist.

15. Computerprogramm zur Bestimmung eines Abstandes zu einem Objekt (20), welches von einer Auswerteeinheit (50) oder einer Steuerung (24) ausführbar ist, die datentechnisch mit einer Abstandsmessanordnung (10) nach einem der vorhergehenden Ansprüche 1 bis 13 gekoppelt ist, wobei das Computerprogramm folgendes umfasst:

    - Programmmittel zum Ansteuern eines Phasenmodulators (60), welcher im Signalpfad (SP) der Abstandsmesseinrichtung (10) angeordnet ist, wobei die Programmmittel dazu ausgestaltet sind, die Phase des Signalstrahls (S) zeitlich periodisch zu modulieren,
    - Programmmittel zur interferometrischen und/oder wellenlängenselektiven Auswertung eines mittels einer Detektoranordnung (28) erfassten Auswertestrahls (A).

Fig. 1

Fig. 2

Fig. 3

Fig. 4

Fig. 5

Fig. 6
A-A

Fig. 7

Europäisches
Patentamt

European
Patent Office

Office européen
des brevets

# EUROPÄISCHER RECHERCHENBERICHT

Nummer der Anmeldung

EP 17 17 0788

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 209567 B3 (ZEISS CARL INDUSTRIELLE MESSTECHNIK GMBH [DE]) 27. Oktober 2016 (2016-10-27) * Absatz [0013]; Abbildungen 1-5 * * Absatz [0026] - Absatz [0068]; Anspruch 1 * ----- | 1-15 | INV. G01B9/02 G01B11/24 |
| X,D | DE 10 2008 033942 B3 (LUPHOS GMBH [DE]) 8. April 2010 (2010-04-08) * Absatz [0011] - Absatz [0012]; Abbildungen 1,2 * ----- | 1-15 | |

RECHERCHIERTE SACHGEBIETE (IPC)

G01B

Der vorliegende Recherchenbericht wurde für alle Patentansprüche erstellt

| Recherchenort | Abschlußdatum der Recherche | Prüfer |
|---|---|---|
| München | 24. Juli 2017 | Beyfuß, Martin |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 17 0788

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2017

| Im Recherchenbericht angeführtes Patentdokument | Datum der Veröffentlichung | Mitglied(er) der Patentfamilie | Datum der Veröffentlichung |
|---|---|---|---|
| DE 102015209567 B3 | 27-10-2016 | KEINE | |
| DE 102008033942 B3 | 08-04-2010 | DE 102008033942 B3<br>WO 2010006764 A2 | 08-04-2010<br>21-01-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008033942 B3